# EUROPEAN PATENT SPECIFICATION

(11) **EP 0 590 705 B1**
(45) Date of publication and mention of the grant of the patent: **08.05.1996**
(21) Application number: 93202532.3
(22) Date of filing: 30.08.1993
(51) Int. Cl.: B01D 24/48

(54) **Cleaning apparatus for contaminated liquids comprising a measuring appliance**
Reinigungsapparat für verunreinigte Flüssigkeiten mit einer Messvorrichtung
Appareil de purification pour liquides contaminés avec un dispositif de mesure

(30) Priority: 28.08.1992 NL 9201517
(43) Date of publication of application: 06.04.1994
(73) Proprietor: ASTRACO BEHEER B.V., 2172 JB Sassenheim (NL)
(72) Inventor: Assen, Harry, NL-2172 Sassenheim (NL)
(74) Representative: Hoorweg, Petrus Nicolaas

(56) References cited:
- DE-B- 2 708 340
- PATENT ABSTRACTS OF JAPAN, vol. 6, no. 68 (C-100)(946), 30 April 1982; & JP - A - 577213 (FUJI DENKI SEIZO)

## Description

The invention relates to an apparatus for cleaning contaminated liquids, such as waste water, which apparatus comprises a vessel filled with a filter bed of a granular filter material such as sand, a double-walled tube which stands immersed in the bed and the one space of which is connected to a pressure source for a gaseous medium such as air to form a transport pump, a second tube protruding into the filter bed for supplying the liquid for cleaning, an outlet for the cleaned liquid arranged at a distance above the filter bed, and a second outlet for the contaminating substance communicating with the top side of the double-walled tube.

Such an apparatus is used for cleaning industrial and domestic waste water, which apparatus is known to have a filter bed of for instance sand which is in continuous movement from top to bottom in the vessel and which is cleaned by the transport pump and deposited once again on the filter bed. With such a filter it is important that the cleaning action remains constant and that therefore the movement of the filter bed should remain constant over the entire periphery of the vessel. It has been found in practice that moments can occur when the movement speed of the filter material in the vessel suddenly deviates after a long period, which is not immediately observed by the operating personnel.

The invention has for its object to provide an apparatus with which the deviation of the speed of movement of the filter material in the vessel is immediately detected.

The apparatus according to the invention is distinguished by a measuring appliance close to the vessel, which measuring appliance is provided with a measuring member connected to the filter bed such that it moves downward with the filter bed in addition to a resetting means for the measuring member for returning it to the starting position after a period of time.

Due to the application of the downward sinking measuring member the speed thereof can be detected, which detection can be used for taking corrective steps.

In one embodiment the measuring member is embodied as an elongate body which co-acts with at least two sensor means for measuring the distance the elongate body has descended.

The elongate body can be embodied as a rod which co-acts with two sensor means which are embodied as approach switches and which are activated when passed, whereafter the time measurement is sufficient to compute the sinking speed of the filter bed.

Above mentioned and other characteristics will be elucidated further in the figure description of two embodiments of the invention hereinbelow. In the drawing:
fig. 1 shows a standing cross-section of a cleaning apparatus according to the invention with an associated measuring appliance shown schematically,
fig. 2 shows an alternative embodiment of the measuring appliance of fig. 1 in perspective view.

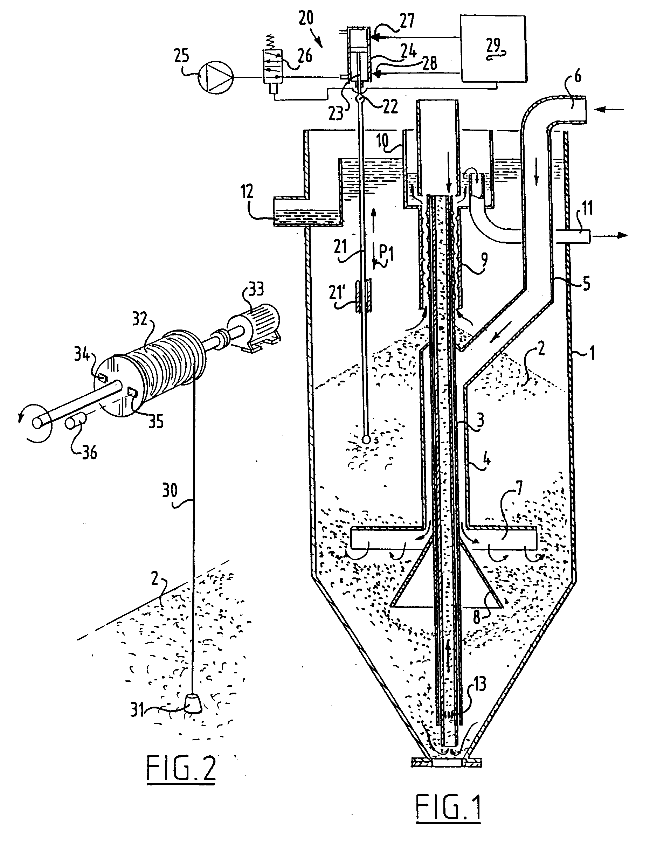

Designated in fig. 1 with the numeral 1 is the vessel in which a filter bed 2 is arranged. The vessel consists of a cylindrical portion and a conical portion connecting thereunder, wherein the top of the vessel is open. Arranged in the middle of the vessel 1 is a double-walled tube 3, the inner tube of which protrudes into the tip of the conical portion of vessel 1, while the outer tube ends at a distance thereabove. At the top the tubes are mutually connected to form a closed space between the inner and outer tube. Halfway along the height of the vessel 1 a tubular jacket 4 is arranged co-axially around the double-walled tube 3, the top end of which jacket is connected to a feed tube 5 for the liquid for cleaning which is supplied at 6. Connected to the underside of jacket 4 in star shape are a number of channels 7 which in cross section form an upside down U, so that the underside thereof is open. A conical jacket 8 is further placed round the double-walled tube 3 at the bottom of the jacket 4.

Above the jacket 4 a second jacket 9 is fitted round the double-walled tube 3, the bottom end of which is open and the top end of which debouches into a tank 10, the upper edge of which lies at the same height as that of the vessel 1. In the bottom of the tank a tube 11 protrudes upward into the tank 10 and runs downward through the wall of the vessel 1 to the outside.

An outlet 12 is further arranged in the upper part of the vessel 1 for the cleaned water.

The cleaning apparatus as described above operates as follows:
The granular filter bed of for instance sand extends above the jacket 4 but beneath the jacket 9.

The liquid for cleaning, for example waste water, is fed into the tube 5 at 6, whereafter it sinks downward to the star-shaped channels 7 where it disperses over the horizontal cross section of the vessel 1 and the filter bed 2. The water is then filtered in upward flow by the granular filling and is carried away out of the vessel 1 at the top via outlet 12. By supplying a quantity of air into the space between both tubes of the double-walled tube 3, this air will flow upward into the inner tube at the bottom via slits 13, carrying with it the granulated material from the filter bed 2. This material is there washed in the upward movement and will flow out above the double-walled tube 3 into the bottom side of the tank 10 and sink downward for a second washing between tube 9 and double-walled tube 3. Cleaned water that flows upward to the tank 10 is used for this second washing, wherein the contamination is carried away with the used water via outlet 11. The sand flows back onto the top of the sand bed 2.

It will be apparent from the above description of the operation that the sand bed makes a continuous downward movement because it is carried away at the bottom by the air transport pump formed by double-walled tube 3 and supplied at the top from the jacket 9. The filter bed can thus be used continuously because it is also continuously cleaned. The degree of speed with which the filter bed sinks determines the cleaning value of the apparatus.

It is therefore important to be able to measure the sinking speed of the filter bed 2, for which purpose the invention proposes a measuring device which is generally designated with the numeral 20.

The measuring appliance is provided with a downward directed elongate body in the form of a rod 21 which at 22 is suspended, either in a guide 21' or not, from the piston rod 23 of a cylinder 24. The cylinder 24 can be fed by a pressure source 25 and is controlled via a valve 26. Two detecting sensors 27 and 28 are arranged at the cylinder 24, signals of which are processed in a computing unit 29.

Detecting of the sinking speed takes place as follows. With a pressureless cylinder 24 the rod 21 stands in the filter bed 2 and sinks down together with this filter bed. During this downward movement according to the arrow P1 the piston of cylinder 24 is likewise carried along, until it has passed the detecting means 28. After passing this detecting means 28 the computing unit and control unit 29 will operate the valve 26 and transport compressed air from the pressure source 25 to the underside of the piston of cylinder 24, whereby the rod 21 is carried upward until the piston has passed the detecting means 27. The system 24 is again made pressureless by switching the valve 26, whereby the rod can sink again. At the start of the downward movement at detecting means 27 and the end of this movement at detecting means 28, the distance between the two detecting means 27, 28 is divided by the time, whereby the sinking speed can be determined by the computing unit 29. With this data further operations and alarm signalling of the system can take place, for example by increasing or reducing the supply speed at which compressed air is fed into the transport pump 3. The sand bed can thereby be cleaned respectively more rapidly or slowly and the sinking speed can be corrected.

Fig. 2 shows an alternative embodiment wherein the rod 21 as elongate body is replaced by a cable 30 on the bottom side of which a weight 31 is suspended which protrudes into the filter bed 2. The cable is wound on a drum 32 which is driven by a disconnectable motor 33. The drum is provided for example with two detecting means 34, 35 which are monitored by a sensor 36. After making one or more revolutions the sensor 36 can energize the motor 33 and carry the cable 30 back out of the sand bed. The time can also be measured at which the detecting means 34, 35 are sensed by the sensor 36. The sensor 36 is in this case coupled to a computing unit 29 (not shown), the measurement data from which is further used for monitoring the cleaning apparatus.

## Claims

1. Apparatus for continuously cleaning contaminated liquids, such as waste water, which apparatus comprises a vessel (1) filled with a filter bed (2) of a granular filter material such as sand, a double-walled tube (3) which stands immersed in the bed and the one space of which is connected to a pressure source for a gaseous medium such as air to form a transport pump, a second tube (5) protruding into the filter bed for supplying the liquid for cleaning, an outlet (12) for the cleaned liquid arranged at a distance above the filter bed, and a second outlet (11) for the contaminated substance communicating with the top of the double-walled tube, **characterized by** a measuring appliance close to the vessel, which measuring appliance is provided with a measuring member (21,30,31) standing in the filter bed such that it moves downward with the filter bed, and a resetting means for the measuring member for returning it to the starting position after a period of time.

2. Apparatus as claimed in claim 1, **characterized in that** the measuring member is an elongate body (21) which co-acts with two sensor means (24,28) located at a distance from each other for measuring the sinking distance.

3. Apparatus as claimed in claim 2, **characterized in that** the elongate body is a rod (21).

4. Apparatus as claimed in claim 1, characterized in that the measuring member comprises an elongate body (30) and a weight (31) which co-acts with a sensor means (36) and two detecting means (34,35) which are located at a distance from each other for measuring the sinking distance.

5. Apparatus as claimed in claim 4, **characterized in that** the elongate body is a cable (30).

6. Apparatus as claimed in any of the foregoing claims, **characterized in that** the measuring appliance is provided with a computing unit (29).

## Patentansprüche

1. Vorrichtung zur kontinuierlichen Reinigung verunreinigter Flüssigkeiten, beispielsweise von Abwässern, welche Vorrichtung einen Behälter (1) aufweist, der mit einem Filterbett (2) aus granularem Filtermaterial, beispielsweise Sand, angefüllt ist, wobei ein doppelwandiges Rohr (3) in das Filterbett eingetaucht ist und der eine Raum des doppelwandigen Rohres mit einer Druckquelle für ein gasförmiges Medium, beispielsweise Luft, versehen ist, um als Transportpumpe zu arbeiten, und wobei ein zweites Rohr (5) in das Filterbett einsteht, um die zu reinigende Flüssigkeit zuzuführen, während ein Auslaß (12) für die gereinigte Flüssigkeit in einem Abstand über dem Filterbett angeordnet ist und ein zweiter Auslaß (11) für die verunreinigten Substanzen mit der Oberseite des doppelwandigen Rohres in Verbindung steht,
gekennzeichnet durch eine dicht am Behälter vorgesehene Meßeinrichtung, die mit einer Meßsonde (21, 30, 31) ausgerüstet ist, die derart in das Filterbett eintaucht, daß sie sich mit dem Filterbett nach unten bewegt, wobei eine Rückstelleinrichtung vorgesehen ist, um die Meßsonde nach einer Zeitdauer in die Ausgangslage zurückzuführen.

2. Vorrichtung nach Anspruch 1,
dadurch gekennzeichnet, daß die Meßsonde als langgestreckter Körper (21) ausgebildet ist, der mit zwei Sensoren (27, 28) zusammenwirkt, die in einem Abstand zueinander angeordnet sind, um die Sinkgeschwindigkeit zu messen.

3. Vorrichtung nach Anspruch 2,
dadurch gekennzeichnet, daß der langgestreckte Körper eine Stange (21) ist.

4. Vorrichtung nach Anspruch 1,
dadurch gekennzeichnet, daß die Meßsonde aus einem langgestreckten Körper (30) und einem Gewicht (31) besteht, welche mit einem Sensor (36) und zwei Detektoren (34, 35) zusammenwirken, die in einem Abstand zueinander angeordnet sind, um die Sinkgeschwindigkeit zu messen.

5. Vorrichtung nach Anspruch 4,
dadurch gekennzeichnet, daß der langgestreckte Körper ein Kabel (30) ist.

6. Vorrichtung nach einem der vorhergehenden Ansprüche,
dadurch gekennzeichnet, daß die Meßeinrichtung mit einem Computer (29) ausgerüstet ist.

## Revendications

1. Dispositif d'épuration continue de liquides contaminés, tels que des eaux usées, lequel dispositif comprend un récipient (1) rempli avec un lit filtrant (2) de matière granulaire filtrante telle que du sable, un tube (3) à double paroi qui se trouve immergé dans le lit et dont le premier espace est connecté à une source de pression pour un milieu gazeux, tel que de l'air, pour former une pompe de transport, un deuxième tube (5) dépassant dans le lit filtrant pour introduire le liquide à épurer, une sortie (12) pour le liquide épuré placée à distance au-dessus du lit filtrant, et une deuxième sortie (11) pour la substance contaminée communiquant avec le dessus du tube à double paroi, caractérisé par un équipement de mesure proche du récipient, lequel équipement de mesure est muni d'un élément de mesure (21, 30, 31) placé dans le lit filtrant en sorte qu'il se déplace vers le bas avec le lit filtrant, et un moyen de remise à zéro de l'élément de mesure, pour le ramener à sa position de départ après une période de temps.

2. Dispositif selon la revendication 1, caractérisé en ce que l'élément de mesure est un corps allongé (21) qui coopère avec deux éléments capteurs (24, 28) situés à distance l'un de l'autre pour mesurer la profondeur d'enfoncement.

3. Dispositif selon la revendication 2, caractérisé en ce que le corps allongé est une tige (21).

4. Dispositif selon la revendication 1, caractérisé en ce que l'élément de mesure comprend un corps allongé (30) et un poids (31) qui coopère avec un moyen capteur (36) et deux moyens détecteurs (34, 35) qui sont situés à distance les uns des autres pour mesurer la profondeur d'enfoncement.

5. Dispositif selon la revendication 4, caractérisé en ce que le corps allongé est un câble (30).

6. Dispositif selon l'une quelconque des revendications précédentes, caractérisé en ce que l'équipement de mesure est muni d'une unité de calcul (29).
